# EUROPÄISCHE PATENTANMELDUNG

(11) **EP 2 383 479 A2**
(43) Veröffentlichungstag der Anmeldung: **02.11.2011**
(21) Anmeldenummer: 11157778.9
(22) Anmeldetag: 11.03.2011
(51) Int. Cl.: F16C 19/44, F16C 33/46

(54) **Nadellager mit einem Fensterkäfig mit Halteelementen an den Stegen und mit je zwei Nadeln in einer Käfigtasche**

(30) Priorität: 01.04.2010 DE 102010013629
(71) Anmelder: Aktiebolaget SKF, 41 550 Göteborg (SE)
(72) Erfinder: Götz, Johannes, 97520, Röthlein (DE); Hain, Steffen, 97753, Karlstadt (DE); Dr. Schulz, Ingo, 97447, Gerolzhofen (DE); Steblau, Dieter, 97074, Würzburg (DE)
(74) Vertreter: Schonecke, Mitja

(57) **Zusammenfassung**

Die Erfindung betrifft ein Nadellager (1) mit einem Käfig (2), in dem zwischen zwei Seitenringen (3, 4) des Käfigs (2) und die Seitenringe (3, 4) verbindenden Stegen (5) des Käfigs (2) Käfigtaschen (6) zur Aufnahme von Nadeln (7, 8) ausgebildet sind, wobei in mindestens einer der Käfigtaschen (6) des Käfigs (2) zwei Nadeln (7, 8) unmittelbar nebeneinander angeordnet sind und wobei Halteelemente (9, 10) vorhanden sind, mit denen die Nadeln (7, 8) in radialer Richtung (r) in der Käfigtasche (6) gehalten werden. Um einen geringeren Verschleiß bei ruhigerem Lauf zu erreichen und eine kostengünstige Fertigung zu ermöglichen, sieht die Erfindung vor, dass die Halteelemente (9, 10) als am Steg (5) angeordnete und sich in Umfangsrichtung (U) erstreckende Vorsprünge ausgebildet sind, wobei die Vorsprünge sich über die gesamte axiale Breite (b) der Käfigtasche (6) erstrecken.

## Beschreibung

Die Erfindung betrifft ein Nadellager mit einem Käfig, in dem zwischen zwei Seitenringen des Käfigs und die Seitenringe verbindenden Stegen des Käfigs Käfigtaschen zur Aufnahme von Nadeln ausgebildet sind, wobei in mindestens einer der Käfigtaschen des Käfigs zwei Nadeln unmittelbar nebeneinander angeordnet sind, wobei Halteelemente vorhanden sind, mit denen die Nadeln in radialer Richtung in der Käfigtasche gehalten werden, wobei die Halteelemente als am Steg angeordnete und sich in Umfangsrichtung erstreckende Vorsprünge ausgebildet sind, wobei die Vorsprünge sich über die gesamte axiale Breite der Käfigtasche erstrecken.

Ein Nadellager dieser Art offenbart die DE 1 886 747 U**.** Ähnliche Lösungen zeigen die GB 752 854 A**,** die DE 1 009 445 B und die US 3 382 016 A**.** Ein ähnliches Nadellager ist beispielsweise in der CH 338 655 beschrieben. Das Nadellager weist hier einen Käfig auf, in dem pro Käfigtasche je zwei Nadeln angeordnet sind. Dies hat Vorteile, wenn beispielsweise ein Bauteil um relativ geringe Schwenkwinkel verschwenkbar gelagert werden muss, wobei die Schwenkbewegung als hin und her gehende Bewegung stattfindet, wie es beispielsweise für die Lagerung eines Pleuels typisch ist. Damit die Nadeln nicht aus dem Käfig herausfallen können, weisen die Käfigstege in der zuletzt genannten Druckschrift an zwei axial beabstandeten Stellen nasenartige Vorsprünge auf, die als Halteelemente fungieren.

Eine ähnliche Lösung ist in der DE 35 43 364 A1 und in der US 2 772 128 beschrieben. Auch hier kommen Nadellager mit Käfigen zum Einsatz, in deren Aufnahmetaschen zwei Nadeln angeordnet sind. Zur Halterung der Nadeln sind wiederum nasenartig vorspringende Bereiche an den Stegen angeordnet oder angeformt.

Nachteilig ist bei diesen vorbekannten Ausführungsformen eines Nadellagers, dass die Herstellung werkzeugtechnisch relativ aufwändig ist, sofern der Nadellagerkäfig als Spritzgießformteil aufgeführt werden soll. Dies ist durch die nasenartigen Vorsprünge an den Stegen bedingt, die zur Halterung der Nadeln vorgesehen werden müssen.

Weiterhin tritt ein nicht unerheblicher Verschleiß an den Haltenasen auf. Insbesondere in oszillierenden Anwendungen (Pleuel) wirken die ständigen Richtungswechsel infolge entsprechender Kräfte auf die Halteelemente. Ebenfalls verschleißintensiv ist der Einsatz des Nadellagers bei auftretenden Stoßbelastungen. Durch eine derartige Belastung kann es zu einem Schränken der Nadeln kommen, die dann entsprechend hohe Belastungen auch auf die Haltenasen ausüben.

Schließlich ist es auch nachteilig, dass der Lauf eines gattungsgemäßen Nadellagers relativ unruhig und somit laut ist.

Der Erfindung liegt daher die **Aufgabe** zu Grunde, ein Nadellager der eingangs genannten Art so fortzubilden, dass die erläuterten Nachteile vermindert bzw. abgestellt werden. Demgemäß soll das Nadellager und insbesondere dessen Käfig in einfacher und kostengünstiger Weise herstellbar sein, insbesondere durch Spritzgie-βen. Der Verschleiß des Lagers soll reduziert werden. Dabei sollen insbesondere auch oszillierende Bewegungen und Stoßbelastungen verbessert aufgenommen werden können. Schließlich soll sich das Nadellager durch einen ruhigeren Lauf auszeichnen.

Die L ö s u n g dieser Aufgabe durch die Erfindung ist dadurch gekennzeichnet, dass eine einer Nadel zugewandte Fläche eines Halteelements eine ebene Form aufweist, wobei sich das Halteelement beginnend von einem Teilkreis des Nadellagers aus radial nach außen erstreckt, wobei eine einer Nadel zugewandte zweite Fläche des Stegs, die innerhalb des Teilkreises liegt, eine ebene Form aufweist, wobei die Oberflächennormale der einer Nadel zugewandten Fläche des Halteelements und die Oberflächennormale der einer Nadel zugewandte zweite Fläche des Stegs einen Winkel einschließen, der zwischen 20° und 40° beträgt, und wobei die einer Nadel zugewandte zweite Fläche in ihrem radial inneren Bereich in eine dritte Fläche übergeht, die so ausgebildet ist, dass sich die Käfigtasche in Umfangsrichtung erweitert.

Die einer Nadel zugewandte zweite Fläche des Stegs kann insbesondere eine Oberflächennormale aufweisen, die in Umfangsrichtung (also tangential) weist oder mit dieser Richtung einen Winkel zwischen 0° und 10° einschließt.

Dies schafft vorteilhafter Weise Raum für Schmiermittel. Die dritte Fläche kann dabei eben ausgebildet sein. Bevorzugt ist dabei vorgesehen, dass die dritte Fläche zur radialen Richtung einen Winkel zwischen 15° und 45° einschließt.

Der Käfig besteht bevorzugt aus Kunststoff.

Die Halteelemente erstrecken sich bei der vorgeschlagenen Lösung also über die gesamte Breite der Aufnahmetasche, in axiale Richtung gesehen. Mit dieser vorgeschlagenen Ausgestaltung eines Nadellagers wird es möglich, die Werkzeugkosten zu reduzieren, da das Werkzeug einfacher ausgeführt werden kann (es sind keine Unterbrechungen der Halteelemente über die axiale Erstreckung nötig bzw. vorgesehen).

Die tragende Fläche der Halteelemente wird im Vergleich zu vorbekannten Lösung wesentlich erhöht. Demgemäß ist die spezifische Belastung der Halteelemente deutlich geringer, was zu einem verminderten Verschleiß führt. Dies macht sich insbesondere bei oszillierenden Anwendungen positiv bemerkbar, beispielsweise in einer Pleuellagerung, für die sich die Erfindung besonders gut eignet.

Auch im Falle von stoßartiger und hochfrequenter Belastung der Lagerung können derartige Belastungen in besserer Weise vom Lager aufgenommen werden.

Durch die sich ergebende größere Umschlingung der Wälzkörper (Nadeln) kann schließlich ein geräuschärmerer Lauf erreicht werden.

Durch die vorgeschlagene Geometrie der als Halteelemente dienenden Vorsprünge wird ein Herausfallen der Nadeln aus den Käfigtaschen verhindert. Es entsteht demgemäß ein Selbsthalteeffekt der Nadeln in den Käfigtaschen.

Die Geometrie der Vorsprünge in Relation zu dem Aufnahmeraum einer Käfigtasche ist dabei so gewählt, dass zum Austritt einer Nadel eine Überdeckung der beiden benachbarten Nadeln erforderlich wäre. Da dies nicht stattfinden kann, sind die Nadeln im montierten Zustand der Lageranordnung in der Käfigtasche gesichert. Das maximale Käfigtaschenmaß ist also kleiner als die Summe der beiden Wälzkörperdurchmesser; es entsteht ein Übermaß (Überdeckung) und so der Selbsthalteeffekt.

Die Auslegung des Nadellagers erfolgt bevorzugt so, dass der Abstand zweier benachbarter Nadeln in einer Käfigtasche (der sich aus den Wälzkörperdurchmessern ergibt) so gewählt wird, dass dieser kleiner ist als der sich aufgrund des oszillierenden Schwenkwinkels ergebende Abrollweg einer Nadel auf der Laufbahn (zurückgelegter Weg des Wälzkörpers auf der Laufbahn). Damit kommt es zu Überrollungen von Schmierstoffablagerungen zwischen den Nadeln, was zu einer verbesserten Verteilung des Schmiermediums führt. Das wiederum verbessert die Versorgung des Wälzkontakts mit Schmiermittel. Die Überrollung von Schmierstoffablagerungen und damit die Verteilung desselben werden also durch Abstimmung des Wälzkörperdurchmessers und des zurückzulegenden Wegs des Wälzkörpers auf seiner Laufbahn bestimmt.

Eine zu geringe Tragzahl und zu hohe Kontaktspannungen werden durch eine Erhöhung der Wälzkörperanzahl im Lager eliminiert. Um eine gute Führung der Nadeln im Käfig zu gewährleisten und damit das Schränken der Nadeln zu reduzieren, wird ein Käfig mit je zwei Wälzkörpern pro Käfigtasche eingesetzt.

Gleichzeitig wird das Geräuschniveau reduziert und Platz für das Schmiermedium im Käfig geschaffen.

Durch die selbsthaltende Anordnung ergibt sich auch in vorteilhafter Weise eine Vereinfachung der Montage. Es sind keine Montagehülsen und Haltevorrichtungen erforderlich. Hierdurch wird das Handling vereinfacht und so eine Kostenreduktion bei der Montage erzielt.

In der Zeichnung ist ein Ausführungsbeispiel der Erfindung dargestellt. Es zeigen:
- Fig. 1: den Schnitt A-B gemäß Fig. 2 durch ein Nadellager, wobei dieses nur abschnittsweise dargestellt ist, und
- Fig. 2: den Käfig des Nadellagers gemäß Fig. 1, das nur abschnittsweise dargestellt ist, gesehen aus radialer Richtung.

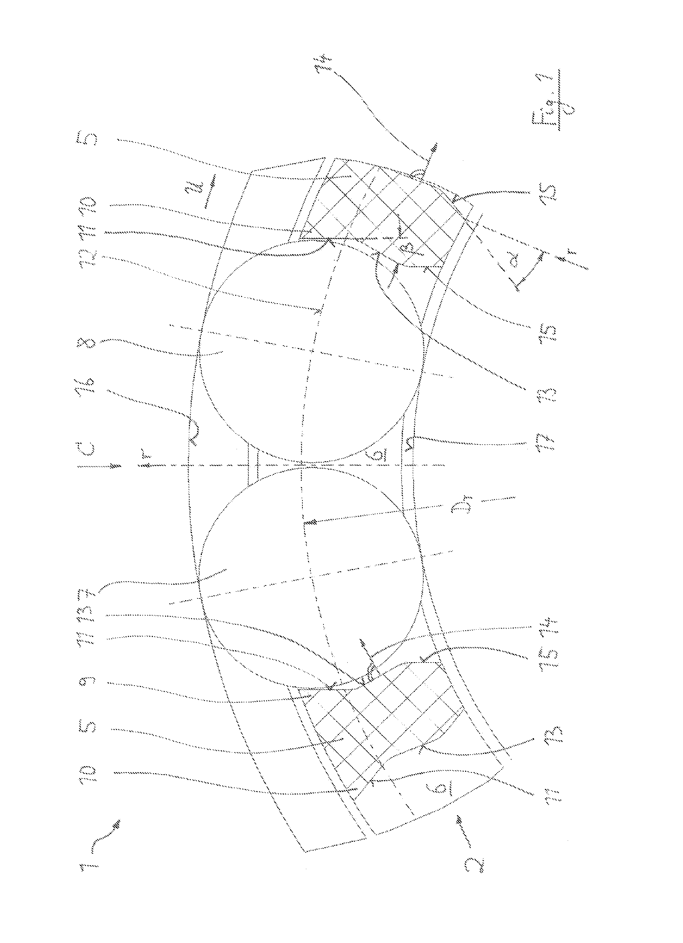

In den Figuren ist ein Nadellager 1 bzw. dessen Käfig 2 zu sehen. Der Lageraußenring und der Lagerinnenring sind in Fig. 1 nur angedeutet, wobei die Außenringlaufbahn 16 und die Innenringlaufbahn 17 zu sehen sind. In der Praxis werden die Außen- und/oder Innenringe häufig durch Laufflächen auf zu lagernden Bauteilen gebildet.

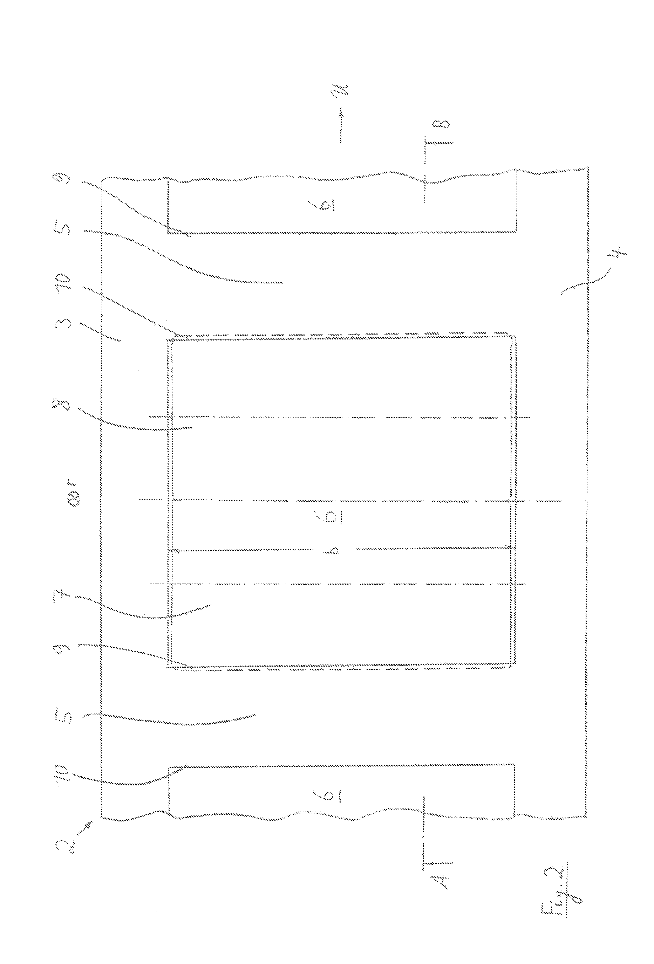

Der Käfig 2 ist klassisch aufgebaut. Er hat zwei Seitenringe 3 und 4 (s. Fig. 2), die über eine Anzahl Stege 5 miteinander verbunden sind. Zwischen den Seitenringen 3, 4 und den Stegen 5 werden demgemäß Käfigtaschen 6 ausgebildet.

In jeder Käfigtasche 6 sind vorliegend je zwei Nadeln 7 und 8 angeordnet, wie es für eine Käfigtasche 6 in den beiden Figuren dargestellt ist. Damit die Nadeln 7, 8 nicht aus der Käfigtasche 6 radial nach außen herausfallen, sind Halteelemente 9 bzw. 10 an den Stegen 5 angeformt, wie es am besten in Fig. 1 gesehen werden kann. Wie es wiederum in Fig. 2 gesehen werden kann, erstrecken sich die Halteelemente 9, 10 über die gesamte axiale Breite b der Käfigtasche 6.

Damit wird für die Nadeln 7, 8 eine relativ großflächige Halterung gebildet, die für eine gute Führung ein einen ruhigen Lauf sorgt.

Die Fläche 11, die das Halteelement 9, 10 an ihrer der Nadel 7, 8 zugewandten Seite bildet, ist im Ausführungsbeispiel eben ausgebildet. Sie reicht vom radial außenliegenden Ende des Halteelements 9, 10 radial nach innen bis zu einem Teilkreis 12, der einen Teilkreisdurchmesser D_{T} hat. Die beiden sich gegenüberliegenden Flächen 11 einer Käfigtasche 6 sind dabei im Ausführungsbeispiel parallel zueinander angeordnet.

An die Fläche 11 schließt sich radial nach innen ― beginnend am Teilkraft 12 - eine zweite, ebenfalls ebene Fläche 13 an, die im wesentlichen in radiale Richtung r verläuft. Demgemäß weist eine Oberflächennormale 14 (s. Fig. 1) auf der zweiten Fläche 13 in Umfangsrichtung U. Die Oberflächennormale kann mit der Umfangsrichtung U aber auch einen kleinen Winkel einschließen, der kleiner als 10° ist.

Im Ausführungsbeispiel ist dabei vorgesehen, dass die Oberflächennormale der einer Nadel 7, 8 zugewandten Fläche 11 des Halteelements 9, 10 und die Oberflächennormale der einer Nadel 7, 8 zugewandte zweite Fläche 13 des Stegs 5 einen Winkel β einschließen, der zwischen 20° und 40°, vorzugsweise zwischen 25° und 35°, beträgt. Dieser Winkel ist in Fig. 1 eingetragen.

Durch die Ausgestaltung der Flächen 11, 13 wird eine selbsthaltende Einheit geschaffen, aus der die (vor-)montierten Nadeln 7, 8 nicht herausfallen können.

Noch weiter innen geht die zweite Fläche 13 in eine dritte, wiederum ebene Fläche 15 über. Wie in Fig. 1 gesehen werden kann, verläuft diese Fläche 15 unter einem Winkel α zur radialen Richtung r. Der Winkel α beträgt im Ausführungsbeispiel ca. 30°.

### Bezusszeichenliste

- 1: Nadellager
- 2: Käfig
- 3: Seitenring
- 4: Seitenring
- 5: Steg
- 6: Käfigtasche
- 7: Nadel
- 8: Nadel
- 9: Halteelement 10 Halteelement
- 11: Fläche
- 12: Teilkreis
- 13: zweite Fläche
- 14: Oberflächennormale
- 15: dritte Fläche
- 16: Außenringlaufbahn
- 17: Innenringlaufbahn
- r: radiale Richtung
- U: Umfangsrichtung
- b: axiale Breite der Käfigtasche
- D_{T}: Teilkreisdurchmesser
- a: Winkel
- β: Winkel

## Patentansprüche

1. Nadellager (1) mit einem Käfig (2), in dem zwischen zwei Seitenringen (3, 4) des Käfigs (2) und die Seitenringe (3, 4) verbindenden Stegen (5) des Käfigs (2) Käfigtaschen (6) zur Aufnahme von Nadeln (7, 8) ausgebildet sind, wobei in mindestens einer der Käfigtaschen (6) des Käfigs (2) zwei Nadeln (7, 8) unmittelbar nebeneinander angeordnet sind, wobei Halteelemente (9, 10) vorhanden sind, mit denen die Nadeln (7, 8) in radialer Richtung (r) in der Käfigtasche (6) gehalten werden, und wobei die Halteelemente (9, 10) als am Steg (5) angeordnete und sich in Umfangsrichtung (U) erstreckende Vorsprünge ausgebildet sind, wobei die Vorsprünge sich über die gesamte axiale Breite (b) der Käfigtasche (6) erstrecken,
**dadurch gekennzeichnet,**
**dass** eine einer Nadel (7, 8) zugewandte Fläche (11) eines Halteelements (9, 10) eine ebene Form aufweist, wobei sich das Halteelement (9, 10) beginnend von einem Teilkreis (12) des Nadellagers (1) aus radial nach außen erstreckt, wobei eine einer Nadel (7, 8) zugewandte zweite Fläche (13) des Stegs (5), die innerhalb des Teilkreises (12) liegt, eine ebene Form aufweist, wobei die Oberflächennormale der einer Nadel (7, 8) zugewandten Fläche (11) des Halteelements (9, 10) und die Oberflächennormale der einer Nadel (7, 8) zugewandte zweite Fläche (13) des Stegs (5) einen Winkel (β) einschließen, der zwischen 20° und 40° beträgt, und wobei die einer Nadel (7, 8) zugewandte zweite Fläche (13) in ihrem radial inneren Bereich in eine dritte Fläche (15) übergeht, die so ausgebildet ist, dass sich die Käfigtasche (6) in Umfangsrichtung (U) erweitert.

2. Nadellager nach Anspruch 1, **dadurch gekennzeichnet, dass** der Winkel (β) zwischen 25° und 35° beträgt.

3. Nadellager nach Anspruch 1 oder 2, **dadurch gekennzeichnet, dass** die dritte Fläche (15) eben ausgebildet ist.

4. Nadellager nach Anspruch 3, **dadurch gekennzeichnet, dass** die dritte Fläche (15) zur radialen Richtung (r) einen Winkel (α) zwischen 15° und 45° einschließt.

5. Nadellager nach einem der Ansprüche 1 bis 4, **dadurch gekennzeichnet, dass** der Käfig (2) aus Kunststoff besteht.
